# EUROPEAN PATENT SPECIFICATION

(11) **EP 0 454 192 B1**
(45) Date of publication and mention of the grant of the patent: **23.08.1995**
(21) Application number: 91200586.5
(22) Date of filing: 18.03.1991
(51) Int. Cl.: H04B 1/74

(54) **Transmission network for transmitting signals, comprising nodes and transmission sections with backup capacity**
Übertragungsnetzwerk zur Übertragung von Signalen mit Knoten und redundanten Übertragungsabschnitten
Réseau de transmission pour la transmission de signaux comprenant des noeuds et des tronçons de transmission redondants

(30) Priority: 21.03.1990 NL 9000662
(43) Date of publication of application: 30.10.1991
(73) Proprietor: Koninklijke PTT Nederland N.V., 2509 CH Den Haag (NL)
(72) Inventor: Driesen, Johannes Jacobus Arnoldus, NL-2317 LM Leiden (NL)

(56) References cited:
- EP-A- 0 212 806
- PATENT ABSTRACTS OF JAPAN vol. 12, no. 80 (E-590)(2927) 12 March 1988,& JP-A-62 219720 (NEC CORP.) 28 September 1987,
- FUJITSU-SCIENTIFIC AND TECHNICAL JOURNAL. vol. 14, no. 4, December 1978,
- KAWASAKI JP pages 1 - 15; IWAMA ET AL.: "HEURISTIC ALGORITHM IN FAILURESWITCHING PATTERN DESIGN FOR TRANSMISSION LINE NETWORK"
- ERICSSON REVIEW. vol. 56, no. 1, 1979, STOCKHOLM SE pages 40 - 48; HEDMAN ETAL. : "AUTOMATIC PROTECTION SWITCHING OF TRANSMISSION LINKS"

## Description

### A. BACKGROUND OF THE INVENTION

### 1. Field of the invention

The invention relates to a transmission network for transmitting signals, comprising nodes and transmission sections accommodated between them, such transmission sections comprising a main connection and a backup connection.

### 2. Prior art

Such a transmission network is known from the references mentioned under C. Reference 1 proposes a grid-like digital network in which DCSs (Digital Cross Systems) are used as nodes. The use of DCSs offers advantages in protecting the network. The protective concept proposed is to arrange to make use of a logically separate backup network of the same (physical) carriers as the regular main network. The cross-connected network must have sufficient backup capacity to be able to function if a failure occurs in a transmission section (but also in the event of deliberate interruption of a transmission section, for example in connection with network maintenance). In the event of such a failure, this is detected by the DCSs on either side of the point of failure and, in conjunction with other DCSs, a temporary reserve path is routed through the network, use being made of the existing backup capacity in the cables. The DCSs can either be controlled centrally or locally (in a distributed manner).

A disadvantage of the known transmission network is that it has to be provided of necessity with the said DCSs, viz. in order to ensure that, in the event of a cable failure, the traffic via the failed cable is transmitted via another route. That other route is then chosen and realised by interaction of the DCSs under the control of a central or local DCS control. Although the proposed transmission network offers a great degree of flexibility, fairly complex equipment (DCSs and DCS control) and control software are necessary. While, in addition, in the event of failure a new route between the nodes on either side of the point of failure has to be calculated and realised - within a short time - by means of a fairly complex computation process.

Reference 2 (see part C. below) discloses a similar network architecture comprising backup capacity. Under normal conditions there is a number of stand-alone backup sections (standby sections). Not until a fault occurrence, a temporary backup route will be formed. The network architecture also comprises a computerized control system to construct said temporary backup routes in a fault situation. As stated before, such forming a backup route after the occurence of a fault is disadvantageous.

### B. SUMMARY OF THE INVENTION

The invention provides a transmission network in which it is not necessary to make use of DCSs or the like - although the latter can be used therein - and in which, if a failure occurs - or an interruption in connection with, for example, a new development (modification or extension) or maintenance of the network - no (iterative) computation process has to be carried out to find a new (temporary) route for the interrupted traffic flow.

The invention is characterised in that said backup connection forms part of one or more pre-routed backup rings which comprise, in addition to said backup connection, also the backup connection of other transmission sections belonging to the transmission network, the traffic being routed via the backup rings in the event of failure or interruption in the main section.

The invention is based on the insight that, if a transmission section comprises, in addition to the necessary (physical or virtual) channels for a main connection, also a number of channels for a backup connection and said backup connection forms part of one or (preferably) more already routed backup rings which have said backup connection in common, the traffic (or at least a part of said traffic) through said transmission section (i.e. through the main connection thereof) via the backup rings can be rapidly and simply rerouted in the event of failure (or interruption having another cause). Compared with the prior art, the rerouting takes place rapidly because, after the occurrence of an interruption, a new route does not first have to be sought and established through the network. Where this search for, and establishment of, a new route can only be effected according to the prior art with the aid of the said DCSs and a DCS control system, in the network according to the invention this is done with the aid of less complex equipment such as (semi)permanent connected-through (not of necessity remotely controllable) nodes. A new route in the network according to the invention does not have to be calculated because it is already fixed beforehand. The routing is always carried out via the same backup ring(s) of which the backup connection of the failed transmission section forms part. It is pointed out that the backup connection of the failed transmission section does not itself appear in the backup route since it is to be expected that the channels of the backup connection will be failed like those of the main connection: the disturbed traffic is diverted via the backup ring(s) of which the backup connection forms part, with the exception of the backup connection itself.

Although the number of backup rings is not limited in principle, the preference is that the backup connection of a transmission section forms part of two permanent or semipermanent, in each case pre-routed, backup rings of the type mentioned and that the transmission capacity of said backup rings is each at least equal to half the transmission capacity of the main connection of said transmission section. If the number of backup rings is two, a network can be obtained having a grid-type geometry, in which the main connections of different transmission sections are used for achieving point-to-point transmission connections by means of the through-connection of the sections (hardware-wise or software-wise) in the nodes in the desired way, while the backup connections between the nodes always form part of self-contained backup rings which are independent both of one another and of the main connection. In other words, if two backup rings are chosen per transmission section, a network is obtained in which each of said backup rings serves to "accompany" several transmission sections and, if necessary (in the event of interruption), to take over the function of such a transmission section (temporarily). Each transmission section is therefore accompanied by two backup rings on either side thereof. In this way a network configuration is obtained in which a relatively good degree of protection is nevertheless achieved with relatively low investments in backup connections.

In order to prevent a capacity calculation first having to be carried out in the event of the occurrence of, for example, a failure, provision is preferably made that the backup connection of a transmission section is permanently or semipermanently divided into two or more parallel sub-backup connections, the number of which corresponds to the number of backup rings. Preferably, the capacity distribution of the backup rings is in accord with that of the main connections. For those reasons, provision is also preferably made that the main connection of a transmission section is permanently or semipermanently divided into two or more parallel sub-main connections, the number of which corresponds to the number of backup rings. These last-mentioned options are valid for a transmission network in which the backup connection forms part, according to the invention, of one, two or more backup rings.

### C. REFERENCES

1. Asnaghi, P., et al
   Network planning in the 1990's: Transmission network protection and reconfiguration by means of digital cross-connect systems Proc. NETWORKS ′89, 17-22 Sep. ′89; pp 365-372
2. Hedman, U. et al
   Automatic protection switching of transmission links Ericsson Rev. (Sweden), vol.56, no.1, PP.40-8, 1979, 0 REF.

### D. EXEMPLARY EMBODIMENTS

### 1. Figures

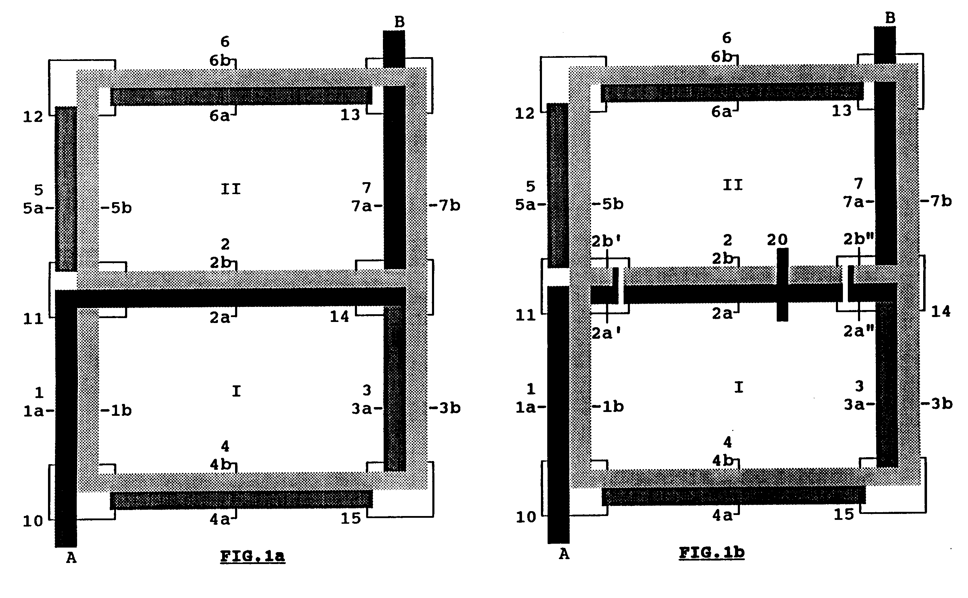

Figure 1a shows a part of the transmission network according to the invention in which a point-to-point connection is achieved via the main connections of a number of transmission sections and in which the backup connections form part of two backup rings; Figure 1b shows the same part of the transmission network but in the case where a failure occurs in a transmission section and the point-to-point connection is rerouted via the backup rings.

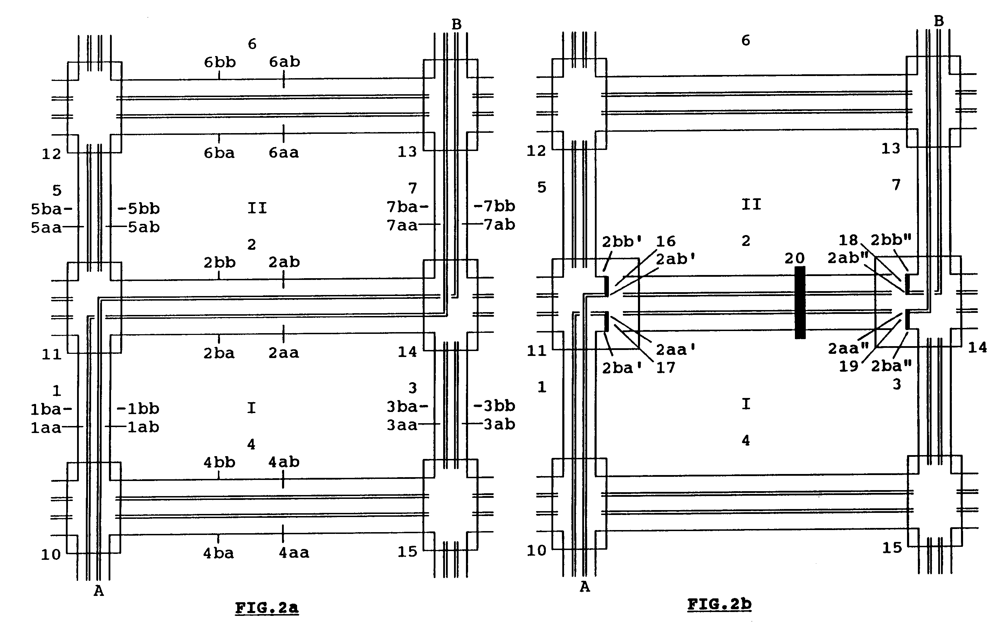

Figure 2a shows the same part of the transmission network as Figure 1a, but in more detail, the main connections and the backup connections being constructed, according to preferred embodiments of the invention, as pairs of equivalent sub-main or sub-backup connections, respectively; Figure 2b shows the same part of the transmission network again after rerouting in connection with a failed transmission section.

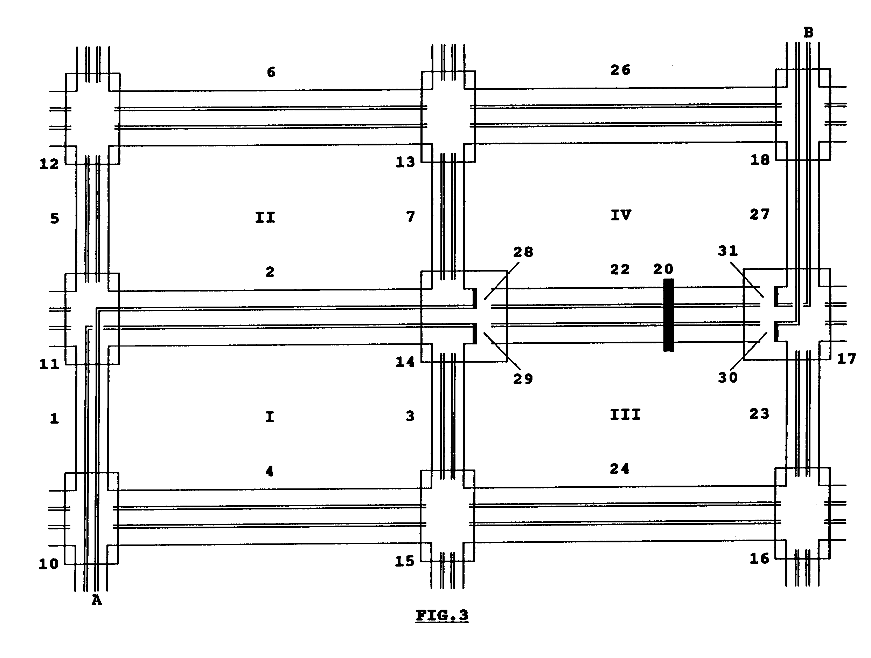

Figure 3 shows a larger portion of the transmission network according to the invention, in a portion of which rerouting has taken place in connection with a failure.

Figures, 4, 5, 6 and 7 show diagrammatically a complete transmission network according to a preferred embodiment of the invention. In Figure 4 the physical structure can be seen. In Figure 5 one connection (of the many not shown) inside the network is indicated under normal operating conditions. Figure 6 shows the occurrence of a failure in a particular network portion, while Figure 7 shows how the connection is routed around the failed network portion.

### 2. Description of the figures and operation

Figures 1a and 1b show the principle of the invention on the basis of the representation of a network of very limited dimensions. Said network is formed by a number of transmission sections 1, 2, 3, 4, 5, 6 and 7, each of the transmission sections being formed by a main connection 1a, 2a, 3a, 4a, 5a, 6a and 7a, and also by backup connections 1b, 2b, 3b, 4b, 5b, 6b and 7b. The various main connections can be through-connected to one another in a number of nodes; these nodes are indicated by 10, 11, 12, 13, 14 and 15. Via these very nodes, the various backup connections are through-connected to one another in a manner such that they form a number of backup rings; in the case shown, two backup rings have been formed, viz. a first backup ring I, formed by the backup connection 1b, 2b, 3b and 4b, and a second backup ring II by the backup connections 5b, 6b, 7b and 2b.

Figure 1a shows the state where a point-to-point connection A-B has been achieved via the consecutive main connections 1a, 2a and 7a which are through-connected to one another in the nodes 11 and 14 (physically and/or logically). Although the main connections 3a, 4a, 5a and 6a additionally shown are shown, they do not form part of the point-to-point connection A-B. In the nodes 10, 11, 14 and 15, the backup connections 1b, 2b, 3b and 4b are connected to one another (physically and/or logically) in a manner such that they form a backup ring I; these through-connections in the nodes mentioned are thus permanent or semipermanent in nature. The second backup ring II mentioned, which is composed of the backup connections 2b, 5b, 6b and 7b is also formed by a (semi)permanent through-connection in the nodes 11, 12, 13 and 14. The manner of through-connection is shown in more detail in Figures 2a and 2b.

Figure 1b indicates a situation in which an interruption has occurred in the transmission section 2, for example, as a consequence of failure. However, an interruption may also be effected deliberately, for example for the purpose of extending the network or for the purpose of maintenance activities. In this figure the point of failure is indicated by 20. As soon as it is detected in the nodes 11, 14 that the traffic flow via the transmission section 2 has been interrupted, said section 2, i.e. both the main connection 2a and the backup connection 2b, is switched off from the rest of the network in the nodes 11 and 14. In addition, the ends of the main connection 2a and the backup connection 2b thus produced on the side of the node 11, indicated by 2a′ and 2b′, respectively, and on the side of the node 14, indicated by 2a˝ and 2b˝, respectively, are through-connected to one another. The traffic flow from A to B is thus passed via the first and the second backup ring I and II. In other words, the traffic flow is now fed via the backup rings I and II, i.e. via the backup connections 1b, 4b and 3b, and 5b, 6b and 7b, instead of via the main connection 2a. After the failure 20 has been eliminated and the transmission section 2 is again capable of carrying the traffic flow, the through-connection of the ends 2a′ and 2b′, and 2a˝ and 2b˝ in the nodes 11 and 14 is eliminated and these ends are again connected to the main connection 2a and the backup connection 2b, the traffic flow thus being carried via the main connection 2a and the backup connection 2b - like the other backup connections shown - carries no traffic flow. However, it is pointed out that although in said Figures 1a and 1b, the traffic flows are carried by two backup rings in the event of the occurrence of the failure 20, this is, of course, equally possible with the aid of only one backup ring, for example the backup ring I formed by the backup connections 1b, 2b, 3b and 4b. Furthermore, these figures do not indicate the way in which the traffic flows are distributed over the two backup rings I and II. These various features are dealt with in greater detail in the treatment of Figures 2a and 2b.

The Figures 2a and 2b correspond completely to the Figures 1a and 1b, with the proviso that these figures indicate how the traffic flow is distributed over a number (two) of sub-main connections and - in the event of failure - a number (two) of sub-backup connections. The network shown in Figure 2a, which completely corresponds to the network shown in Figure la, shows a number of transmission connections 1, 2, 3, 4, 5, 6, 7, as well as two (at least fully shown) backup rings I and II consisting respectively of the backup connections 1bb, 2ba, 3ba and 4bb, and 5bb, 6ba, 7ba and 2bb, respectively. As is shown in Figure 2a, a point-to-point connection is set up in the network between the points A and B. Under normal operating conditions, the traffic flow between these two points A and B is carried via the transmission connections 1, 2 and 7, i.e. via the sub-main connections 1aa and 1ab, 2aa and 2ab, and 7aa and 7ab. In this case, no traffic flow is therefore carried by the backup rings I and II, that is to say by the respective sub-backup connections. Figure 2b shows what happens after a failure has occurred in the transmission section 2. All of this completely corresponds to the representation in Figure 1b. The node 11 contains switching devices 16 and 17 which ensure that the failed transmission section 2, i.e. the sub-main connections 2aa and 2ab, and also the backup connections 2ba and 2bb, is interrupted and the ends 2aa′ and 2ab′ of the sub-main connections 2aa and 2ab are connected to the ends 2ba′ and 2bb′ of the respective sub-backup connections 2ba and 2bb. The sub-main connections 2aa and 2ab are likewise interrupted in the node 14 by switching devices 18 and 19 which also interrupt the sub-backup connections 2ba and 2bb. The ends 2aa˝ and 2ab˝ of the sub-main connections 2aa and 2ab thus produced are then connected to the ends 2ba˝ and 2bb˝ of the sub-backup connections 2ba and 2bb. In this way, the traffic flow between A and B is carried via the two backup rings I and II instead of via the transmission section 2. In determining the capacity of the backup rings I and II, account has been taken of the capacity of the sub-main connections 2aa and 2ab, respectively, so that said backup rings I and II are able to carry the complete traffic flow which was normally carried by the sub-main connections 2aa and 2ab. Furthermore, it is the case that, as regards the capacity of the backup rings I and II, it is preferably as great as the greatest capacity of the different sub-main connections "around" the backup ring concerned. For the backup ring l it is therefore the case that the capacity of said ring, i.e. the capacity of the backup connections 1bb, 2ba, 3ba and 4bb preferably has to be equal to the greatest capacity of, consecutively, the sub-main connections 1ab, 2aa, 3aa and 4ab. It is likewise true that the capacity of the backup ring II, i.e. the capacity of, consecutively, the sub-backup connections 5bb, 6ba, 7ba, and 7bb, preferably has to be as great as the greatest capacity of, consecutively, the sub-main connections 5ab, 6aa, 7aa and 2ab. However, it is also possible to make the choice that the capacity of the backup rings is smaller than the greatest capacity of the respective sub-main connections, but in that case, in the event of the occurrence of a failure in one of the respective transmission sections, the traffic will nevertheless be disturbed to some extent since not all the traffic flow can be carried. Already dividing the main connections into sub-main connections and a corresponding number of backup connections beforehand and at the same time dividing the capacities in the desired manner has the result that, in the event of the occurrence of a failure (20), it is not necessary first to carry out a capacity calculation; it is only necessary to switch off the failed section and to connect the respective ends of the sub-main connections and sub-backup connections to one another. Also, because the backup connections are already so connected-through to one another in the nodes that, with respect to one another and independently with respect to the main connections, these form permanent or semipermanent backup rings, it is therefore not necessary to arrange for a new route of sufficient capacity to be calculated and established through the network, i.e. by an advanced network control system, if a failure (or interruption due to another cause) occurs. The sole "intelligence" which has to be available in the network according to the invention is the control of the switches 16, 17, 18 and 19 in the nodes 11 and 14 and those in the other nodes which are not drawn in further detail. These switch controls can operate at local level, i.e. node level, while, on the other hand, a network control system mentioned above - which is thus not necessary in a network according to the invention - must, of course, work at network level.

Figure 3 shows the same network as the preceding Figures 2a and 2b, but a much larger portion thereof. In this figure, a point-to-point connection A-B has also been achieved, but now via, consecutively, the transmission sections 1, 2, 22 (i.e. in the unfailed state) and 27. This figure indicates that an interruption has occurred in the transmission section 22, making this transmission section 22 temporarily unusable. In the nodes 14 and 17, the switching devices 28, 29 and 30, 31, respectively, located therein have switched off the transmission section 22, i.e. the sub-main connections and the sub-backup connections (not shown in greater detail) and connected through the ends thereof (on the side of said nodes 14 and 17, respectively), to one another so that the transmission connections 2 and 27 are connected to one another via the backup rings III, IV indicated in the figure in the same way as was indicated above in the Figures 2a and 2b.

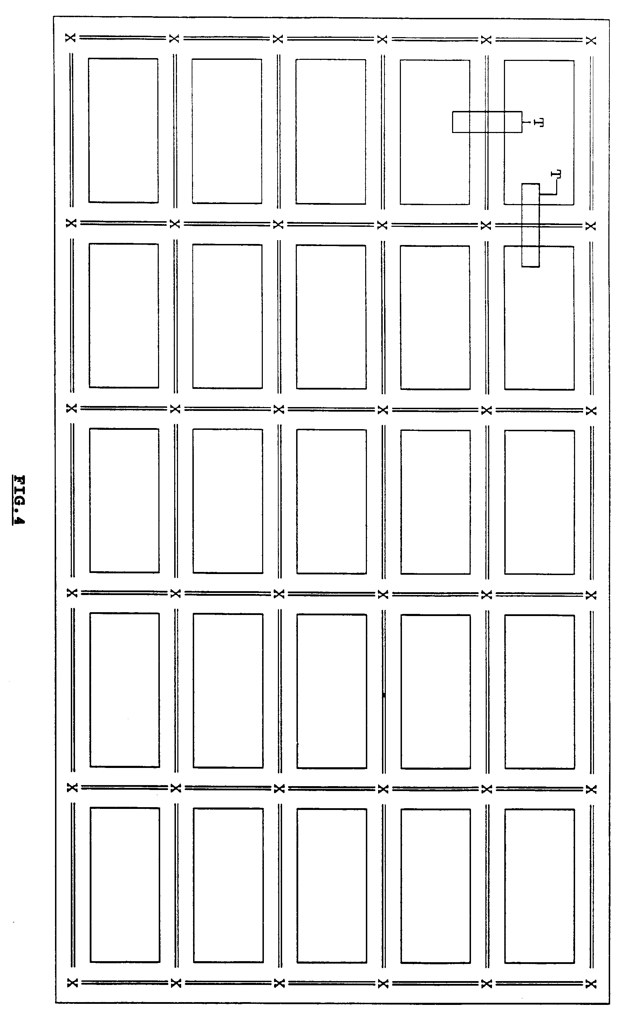

Figure 4 shows diagrammatically a (more) complete network according to the invention. In this figure, the main connections and backup connections of the transmission sections T, and also nodes X, are diagrammatically shown. The main connections are also formed in this figure by two sub-main connections, while a large number of backup rings is formed from the sub-backup connections connected through to one another in the nodes X. Around the entire network is a backup ring which is hierarchically equivalent to the other backup rings. In this way, every main connection is, as it were, flanked by (portions of) two backup rings.

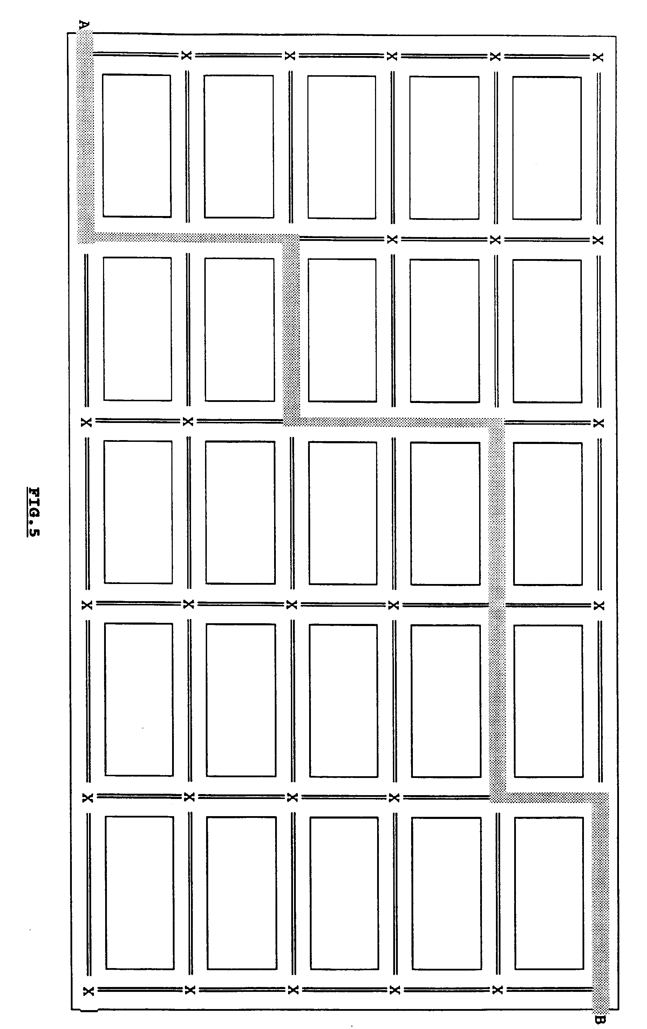

Figure 5 shows that a point-to-point connection has been set up through the network from point A to point B. Said connection A-B is set up by means of connecting transmission sections T to one another in various nodes X.

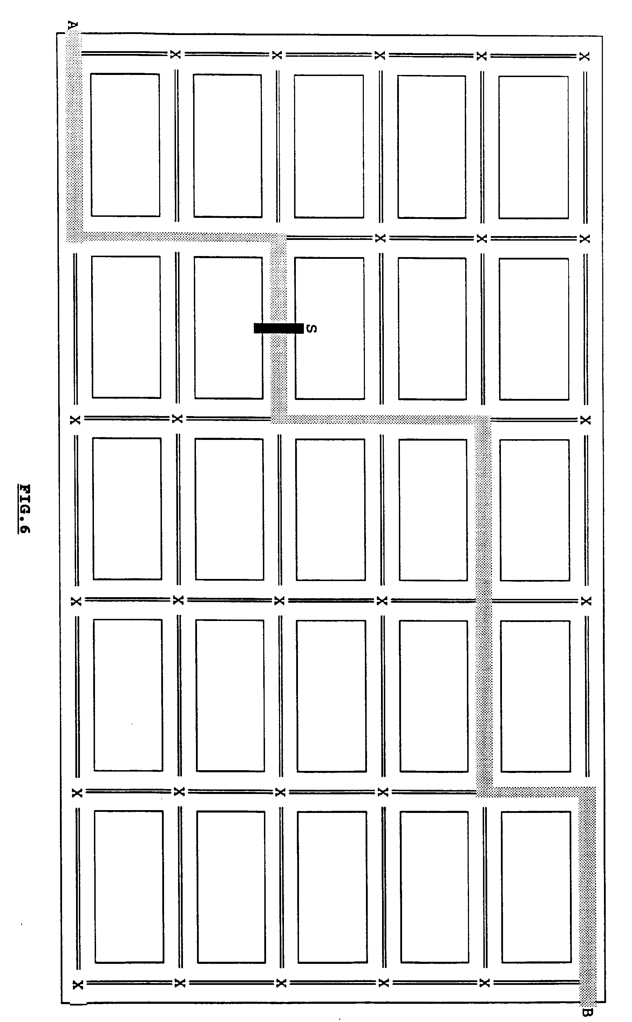

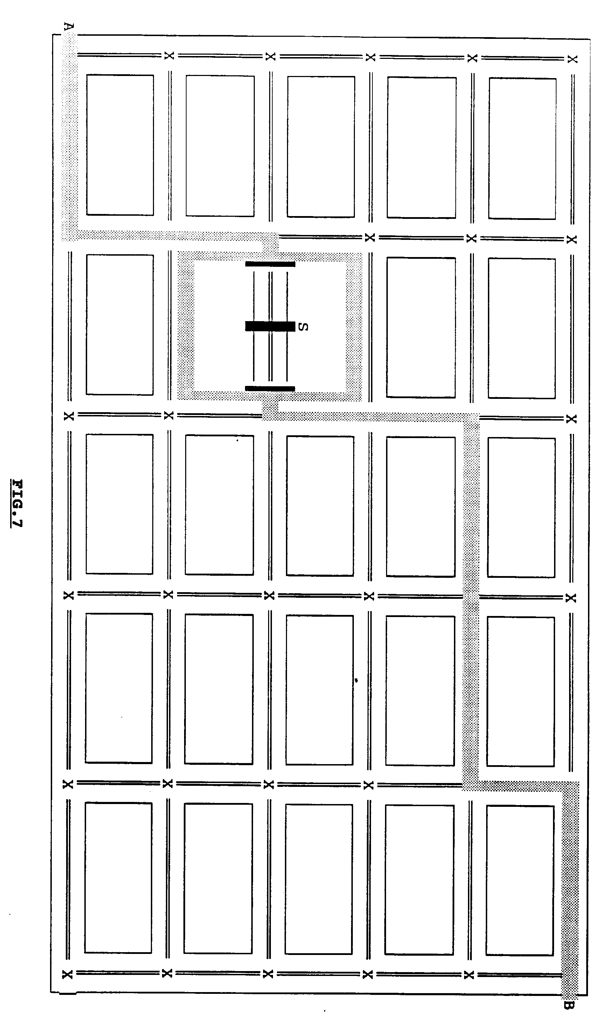

Figure 6 shows that a failure S occurs in one of the transmission sections T, while Figure 7 shows that the failed transmission section is switched off in the nodes on either side of the point of failure S and the ends thereof, which are thereby freed, are taken over via the adjacently situated backup rings I and II. The manner in which all this takes place has been described in greater detail above.

Finally, the following is also pointed out. The figures only show one point-to-point connection A-B which has been achieved via a number of consecutive main connections connected through to one another in the respective nodes. In practice, however, it will often be the case that several point-to-point connections have been achieved via a particular transmission section, i.e. via the main connection thereof, which each make use of part of the capacity of said main connection. If a failure now occurs in such a transmission section, all the point-to-point connections running via said transmission section will be rerouted via the respective backup rings. In this case, however, the term "link protection", in contrast to "path protection", is used, point-to-point connections being separately monitored and rerouted.

## Claims

1. Transmission network for transmitting signals, comprising nodes and transmission sections accommodated between them, such transmission sections comprising a main connection and a backup connection, **characterised** in that said backup connection forms part of one or more pre-routed backup rings which comprise, in addition to said backup connection, also the backup connection of other transmission sections belonging to the transmission network, the traffic being routed via the backup rings in the event of failure or interruption in the main section.

2. Transmission network according to claim 1, characterised in that the backup connection of a transmission section forms part of two pre-routed backup rings of the type mentioned and in that the transmission capacity of said backup rings is each at least equal to half the transmission capacity of the main connection of said transmission section.

3. Transmission network according to claim 1, characterised in that the backup connection of a transmission section is divided into two or more parallel sub-backup connections, the number of which corresponds to the number of backup rings.

4. Transmission network according to claim 1, characterised in that the main connection of a transmission section is divided into two or more parallel sub-main connections, the number of which corresponds to the number of backup rings.

## Patentansprüche

1. Uebertragungsnetzwerk zum Uebertragen von Signalen umfassend Knoten und zwischen diesen liegende Uebertragungsabschnitte, wobei solche Uebertragungsabschnitte eine Hauptverbindung und eine Reserveverbindung umfassen, **dadurch gekennzeichnet, dass** diese Reserveverbindung Teil eines oder mehrerer im voraus ausgelegter Reserveringe bildet, die zusätzlich zu dieser Reserveverbindung auch die Reserveverbindung anderer zum Netzwerk gehörender Uebertragungsabschnitte umfassen, wobei der Verkehr beim Auftreten eines Defekts oder einer Unterbrechung im Hauptabschnitt über die Reserveringe geleitet wird.

2. Uebertragungsnetzwerk nach Anspruch 1, **dadurch gekennzeichnet, dass** die Reserveverbindung eines Uebertragungsabschnitts Teil zweier im voraus ausgelegter Reserveringe des erwähnten Typs bildet, und dass die Uebertragungskapazität dieser Reserveringe jeweils mindestens gleich der Hälfte der Uebertragungskapazität der Hauptverbindung dieses Uebertragungsabschnitts ist.

3. Uebertragungsnetzwerk nach Anspruch 1, **dadurch gekennzeichnet, dass** die Reserveverbindung eines Uebertragungsabschnitts in zwei oder mehrere parallele Sub-Reserveverbindungen aufgeteilt ist, deren Anzahl der Anzahl Reserveringe entspricht.

4. Uebertragungsnetzwerk nach Anspruch 1, **dadurch gekennzeichnet, dass** die Hauptverbindung eines Uebertragungsabschnitts in zwei oder mehrere parallele Sub-Hauptverbindungen aufgeteilt ist, deren Anzahl der Anzahl Reserveringe entspricht.

## Revendications

1. Réseau de transmission pour transmettre des signaux, comprenant des noeuds et des tronçons de transmission situés entre eux, ces tronçons de transmission comprenant une liaison principale et une liaison de secours, caractérisé en ce que ladite liaison de secours fait partie d'une ou plusieurs boucles de secours préétablies qui comprennent, en plus de ladite liaison de secours, également la liaison de secours d'autres tronçons de transmission appartenant au réseau de transmission, le trafic étant acheminé par les boucles de secours en cas de la défaillance ou d'interruption du tronçon principal.

2. Réseau de transmission selon la revendication 1, caractérisé en ce que la liaison de secours d'un tronçon de transmission fait partie de deux boucles de secours préétablies, du type mentionné, et en ce que la capacité de transmission desdites boucles de secours est chacune au moins égale à la moitié de la capacité de transmission de la liaison principale dudit tronçon de transmission.

3. Réseau de transmission selon la revendication 1, caractérisé en ce que la liaison de secours d'un tronçon de transmission est divisée en deux, ou plus, sous-liaisons de secours parallèles, dont le nombre correspond au nombre de boucles de secours.

4. Réseau de transmission selon la revendication 1, caractérisé en ce que la liaison principale d'un tronçon de transmission est divisée en deux, ou plus, sous-liaisons principales parallèles, dont le nombre correspond au nombre de boucles de secours.
